# EUROPEAN PATENT APPLICATION

(11) **EP 1 837 741 A2**
(43) Date of publication of application: **26.09.2007**
(21) Application number: 07251254.4
(22) Date of filing: 23.03.2007
(51) Int. Cl.: G06F 3/033

(54) **Gestural input for navigation and manipulation in virtual space**

(30) Priority: 23.03.2006 US 387404
(71) Applicant: Accenture Global Services GmbH, 8200 Schaffhausen (CH)
(72) Inventor: Levine, Richard B, Marston Hills Massachusetts 02648 (US)
(74) Representative: Fennell, Gareth Charles

(57) **Abstract**

A gestural input system provides an intuitive man-machine interface that converts human locomotion in free space, independent of fiducials and references surfaces to data that may be processed by a controller. A gestural input translates movement of a human and/or manipulation of a device in free space to data or signals for navigating digital content such as a 2D or 3D virtual or augmented reality.

## Description

### BACKGROUND

### Field of the Invention

The present invention relates to data input systems, and particularly to, a computer interface to convert human gestures to data.

### Description of the Related Art

Computing devices have one or more user interfaces that may be cumbersome and incompatible with for many applications that may be run on the computing device. Current interfaces have limited ability to translate instructions from a user to data that may be processed. For example, computers, portable telephones and personal digital assistants have interfaces to provide data input, including alphanumeric keyboards and keypads and the like. The interfaces have a fixed arrangement and may be designed for a limited or specific function. The small size of many small handheld computing devices makes the input device difficult to manipulate and limit the ability of the device to provide additional functionality, such as gaming. As a result, the development and performance of applications, such as gaming applications, are limited by the ability of the interface to provide an intuitive man-machine interface.

Mechanical interfaces that translate movement or physical manipulation of a device, such as joysticks, rocker switches, rollers, touchpads, touch screens, a mouse, trackballs, wheels, gaming controllers, and the like allow allows navigation of two-dimensional ("2D") digital content. For example, a wheel on a personal e-mail device may provide a specific function for scrolling through menus and lists as well as selection of items in the menus and lists. Other mechanical interfaces, such as a mouse, touch pad or joystick, allow a user to scroll through a large spreadsheet, or navigate in a first-person gaming environment. Function or macro keys may be programmed to deploy a sequence of several keystroke sequences, but such programming lacks useful analogs for carrying out multiple or complex functions. Peripheral interfaces with a keyboard and a mouse or trackball may be used with handheld devices, such as person digital assistants ("PDA's"), portable e-mail device, smartphones and the like, but such use may limit the mobility of the handheld device such as with a tether to a desk or fixed position.

Virtual interfaces for navigation of 2D and/or three-dimensional ("3D") digital content, such as in computer-generated virtual worlds and gaming levels enable a user to manipulate virtual objects and navigate virtual space by tracking a user's movements in free space. The virtual interfaces have one or more cameras positioned in a controlled environment and oriented to detect the user, such as around a display. The cameras detect the orientation and relative movement of the user in the environment. The virtual interfaces may require the user to adorn fiducials or sensors that may be detected by the computing device. These virtual interfaces are expensive, bulky, and immobile and may require large amounts of computing resources.

Electronic devices are becoming more intelligent and less function specific. The trend for electronic systems continues toward increased memory and computing power. Electronic devices are becoming more flexible and may be configured to perform multiple functions. User's habits and lifestyles are changing to conform to the multiple electronic devices that surround their existence. However, no system or process has been developed in which the mobility of a device itself provides a basis for providing data input to the device. Accordingly, the adoption of current electronic devices for additional purposes has been limited according to the limited capability of current input interfaces.

Therefore, there is a need for a user interface that provides a virtual porthole or viewport into the digital world, where physical movement of the device via human gestures corresponds to virtual movement of the porthole.

### BRIEF SUMMARY OF THE INVENTION

By way of introduction, a gestural input system, device or method provides an intuitive, easy to understand man-machine interface that converts human locomotion to data that may be processed by a controller. Embodiments for gestural input translate movement of a human and/or manipulation of a device by a human to data. A gestural input interface recognizes, collects, records, and interprets data.

The gestural input interface may be achieved by one or more apparatuses, devices, systems, methods, and/or processes for generate data or signals for input to a controller of an electronic device. The data or signals may be used, for example, to convert a user's movement of a device in free space for navigation in digital content such as a 2D or 3D virtual or augmented reality. The physical movement of a device configured for gestural input may correspond to virtual movement of the porthole from a real to virtual world. The mobility of a handheld electronic device in free space and independent of a reference surface or fiducial point provides the basis for a user interface.

An exemplary handheld electronic device having user interface configured for gestural input, includes a sensor, a controller and a computer program that may be executed by the controller. The sensor that generates information associated with an environmental condition for the handheld electronic device. The changes may be the result of movement of the handheld device in the environment. In an example, the sensor is a digital camera that generates data representative of a sequence of picture frames of the environment. The sensor may also be configured to detect changes in the environmental condition that result from motion, acceleration, distance, velocity, and direction of motion of the handheld electronic device in free space.

The controller is configured to processes the data generated by the sensor according to the computer program. The computer program is executed by the controller to track movement of the handheld device in three-dimensional free space according to the data generated by the sensor. The program translates the tracked movement of the device to a corresponding movement of, or in, digital content. The movement in digital content, or a virtual world, may be scaled to the tracked movement or motion of the device. The scaling may be linear, a multiple of, or a fraction of the movement of the virtual motion. The corresponding movement in digital content is displayed via the user interface. The program executable may detect movement of the handheld electronic device by detecting changes of objects between picture frames in the sequence of picture frames captured by the digital camera. The controller may be configured to detecting movement of the handheld electronic by visual edge detection and/or visual image interpolation techniques.

The foregoing summary is provided only by way of introduction. The features and advantages of the gestural input may be realized and obtained by means of the instrumentalities and combinations particularly pointed out in the claims. Nothing in this section should be taken as a limitation on the claims, which define the scope of the invention. Additional features and advantages of the present invention will be set forth in the description that follows, and in part will be obvious from the description, or may be learned by practice of the present invention.

### BRIEF DESCRIPTION OF THE DRAWINGS

Examples of gestural input systems, methods and apparatuses are described with reference to the accompanying drawings. In each of the following figures, components, features and integral parts that correspond to one another each have the same reference number. The drawings are not true to scale.

Figure 1 is a diagram for an exemplary apparatus configured for as user interface for a gestural input for navigation and manipulation in virtual space;

Figure 2 is a block diagram for a schematic for an exemplary gestural input device;

Figure 3 illustrates an environment for a device enabled for gestural data input; and

Figure 4 illustrates a sequence of picture frames captured by a sensor for a gestural input enable device.

### DETAILED DESCRIPTION OF THE INVENTION

In exemplary embodiments, the gestural input system provides a user interface that translates movement or manipulation of a device in free space as input data or instructions for to an electronic device. The data or instruction, for example, may allow the user to navigate virtual space generated by a computing device, such as a 2D or 3D virtual or augmented reality.

The systems, methods and apparatuses for gestural input may be embodied in many different forms, formats, and designs, and should not be construed as limited to the exemplary embodiments set forth herein. The methods and systems for gestural input may be embodied as one or more devices, distributed networks, apparatuses, methods, processes, data processing systems, or software products. Embodiments may take the form of electronic hardware, computer software, firmware, including object and/or source code, and/or combinations thereof.

The gestural input system may be stored on a computer-readable medium installed on, deployed by, resident on, invoked by and/or used by one or more data processors, computers, clients, servers, gateways, or a network of computers, or any combination thereof. The computers, servers, gateways, may have a controller capable of carrying out instructions embodied as computer software. For example, the gestural input may be a handheld device having electronic components configured to carry out instructions according to a computer program stored on a computer-readable storage medium, such as a memory, hard disk, CD-ROM, optical storage device, magnetic storage device and/or combinations thereof.

A gestural input system may be implemented using any known software platform or frameworks including basic, visual basic, C, C+, C++, J2EE^{™}, Oracle 9i, XML, API based designs, and like component-based software platforms and any proprietary software systems. The gestural input system may interface with other software, firmware and hardware systems implemented by computing devices, such as word processing, database, and spreadsheet applications, and graphics software and systems, such as computer-aided drawing systems, gaming systems and the like.

In an example, a gestural input system provides a user interface for one or more electronic devices. The electronic device may be a computing device having a programmable controller or processor. For example the electronic device may be a personal computer, laptop or handheld computer, tablet pc and like computing devices having a user interface. The electronic device may be a dedicated function device such as personal communications device, a portable or desktop telephone, a personal digital assistant ("PDA"), remote control device, digital music and/or video system and similar electronic devices.

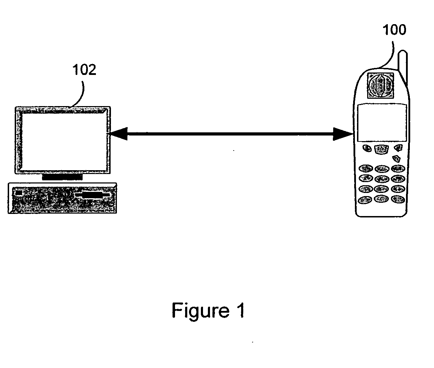

Figure 1 illustrates a gestural input device 100 in communications with a computing device 102. Although Figure 1 illustrates the computing device 102 as a separate and distinct device from the gestural input device 100, the computing device 102 and gestural input device 100 may be a unitary part where the computing device 102 is integrated with the gestural input device 100, and vice versa. The gestural input device 100 may communication with one or more computing devices, even though Figure 1 illustrates a single gestural input device 100 in communications with a single computing device. The computing device 102 also may be in communications with one or more gestural input devices 100.

The gestural input device 100 communicates with the computing device 102 using a wireless or RF communications protocol. For example, the gestural input device 100 may communicate with one or more computing devices 102 based on IEEE 802.11, IEEE 802.14, WI-Max, Wi-Fi, Bluetooth, ZigBee communications protocols and combinations thereof. Alternatively or in addition, the gestural input device 100 may communicate with the computing device 102 via a physical connection or wired coupling of the gestural input device 100 and the computing device 102, such as a serial or parallel communication connection or universal serial bus ("USB") connection.

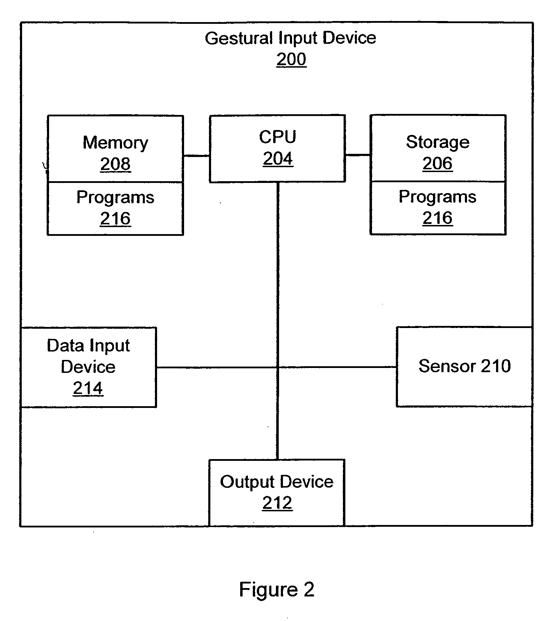

Figure 2 illustrates a block diagram for an exemplary gestural input device 200. The gestural input device 200 includes a programmable controller, central processing unit ("CPU") or other processor 204, a data storage device 206, and a sensor 210. The gestural input device may also include a temporary or volatile memory 208. The gestural input device also may have one or more external output devices 212, such as a display, monitor, a printer or a wired or wireless communications port. The gestural input device may further include a data input device 214, including a keyboard, mouse, trackball, stylus and graphics tablet, buttons, rollers, wheels, touch pad, touch screen, light pens and the like and combinations thereof.

The CPU 204 is adapted to carry out data processing functions according to a set of instructions typically in the form of a computer program 216. The program 216 may reside on the data storage device 206. Alternatively or in addition, the program may be permanently stored in the data storage device and loaded to the memory 208 for access and execution by the CPU 204. The program includes one or more sequences of executable code or coded instructions. The instructions are executed by the CPU 204 to process data and to provide functionality of the gestural input device. The instructions of the program 216 may also be executed by the CPU 204 to a user interface for the gestural input system.

The gestural input device 200 receives or generates data via one or more sensors 208. The sensors 208 may generate data that tracks the movement of the gestural input device 200 in free space. Additionally or alternatively, the sensors may generate signals representative of or associated with movement of the motion of the gestural input device 200 in free space. Input data or instructions may also be provided via data input device 214. The program 216 interfaces the sensors 208 via the CPU 204 to interpret signals from or data generated by the sensors 208. The signals or data may be processed by the CPU 204 to determine movement of the gestural input device in free space. The processed data may be provided to one or more output devices 212, such as a video display or communications port. For example, the tracking data may be processed by the CPU 204 and provided to a communications port for communication via one or more wireless transmission protocols to computing device 102. The processed data also or alternatively may provide instructions for navigating digital content. The movement of the gestural input device detected by the sensors and represented by tracking data may be processed and/or translated by the CPU 204 to a corresponding movement in a gaming application running on the computing device. The data may also identify or represent movement of a cursor, pointer, or icon on a video display 212, The data may relate to a corresponding movement in a virtual environment generated by the CPU 204 and displayed on the video display 212 of the gestural input device. The data may be associated with one or more commands or instructions to be executed by the CPU 204.

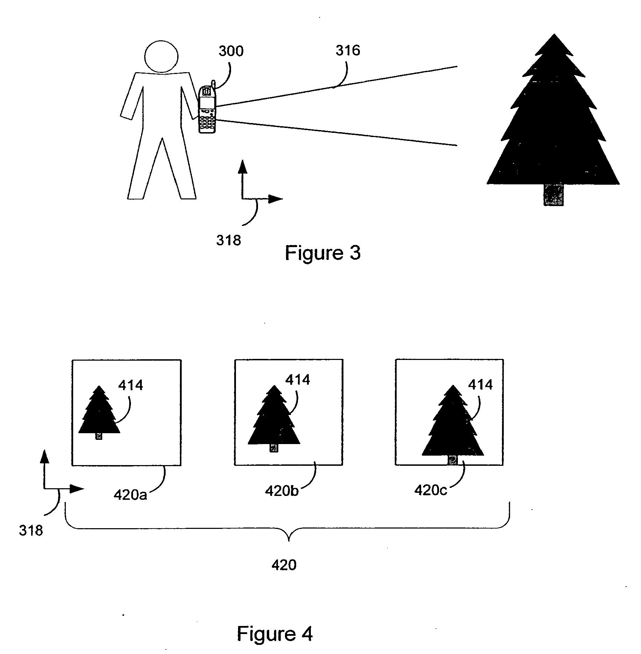

Figure 3 illustrates an example of a handheld gestural input device 300 having a sensor 308. The sensor 308 may generate data or a signal that may be processed for tracking movement of the device 200. For example, the sensor 308 may be a digital camera that captures a picture frame of environment from a field of view 316 of the camera. The camera 308 also may capture a picture frame or a sequence or stream of picture frames of the environment. The gestural input device 300 may have a device driver or other program adapted to run the camera 308 and perform the translation of data from the camera to movement of the gestural input device 300.

The gestural input device 300 may additionally or alternatively include other sensors 308. The sensor may detect motion, acceleration, distance, velocity, and direction of motion. The sensors 308 may generate signals and/or data using technologies such as inertial tracking or dead reckoning, infra-red tracking, radio frequency triangulation, reflective radio frequency technology (radar), reflective sound technology (sonar). The data generated by the sensor 308 may be processed using visual edge detection and/or visual image interpolation to determine movement of the gestural input device 300.

The sensor 308 may be externally coupled with the gestural input device 300 such as by physical a connections via a to USB connection, or by wireless connection using a Bluetooth, ZigBee or similar wireless communications protocol. The motion sensor may be mounted on a user's hand, arm, clothing. The motion sensing device may be stationary and aimed at the user's hand or the gestural input device 300.

Figure 4 illustrates a sequence 420 of picture frames captured by the camera 308. The picture frames 420a, 420b, 420c are captured and represented as digital data or an array of digital data. The data may collectively represent individual picture elements ("pixels") for each picture frame, where the pixels are arranged according to a coordinate system 318 and each pixel is represented as a pixel value at a coordinate location within the coordinate system 318. The data is processed to provide a humanly perceptible visual representation of the field of view 316 of the camera 308.

The sequence 420 of picture frames is generated at a frame rate, where each frame 420a, 420b, 420c in the sequence 420 represents a snapshot of the field of view of the camera at a point in time. Each picture frame 420a, 420b, 420c differs from the previous picture frame by the frame rate. As the gestural input device 300 moves in the environment, and the camera 308, and thus the field of view 316 of the camera 308 also moves. The movement may be characterized in the sequence 420 of picture frames generated by the camera 308 as the difference between sequential picture frames.

The sequence 420 of picture frames 420a, 420b, 420c tracks the movement of the gestural input device in free space. The data representative of each picture frame 420a, 420b, 420c is compared to the data representative of other pictures frames 420a, 420b, 420c in the sequence 420 to identify data representative of the movement of the gestural input device 300. That is, as an object captured in a picture frame moves within the field of view of the camera, the pixels associate with the object change coordinate locations from one picture frame to the next or between one picture frame and a series or sequence of picture frames. The data representing the sequence 420 of picture frames generated by the camera 308 may processed to measure motion in the field of view 316 by interpolating the edges of objects 422 in the field and an axis 316 of field of view 316 to determine a direction of the motion. Thus, the gestural input device 300 translates the movement or manipulation of the gestural input device 300 in free space to data that may be processed by the CPU 204 and/or computing device 102.

In an example, the gestural input device 200 is a portable or cellular telephone having a digital camera. Because the cellular telephone is portable, it is inherently capable of being manipulated though hand and arm movement of a human user in 3D or free space. A telephone platform may have camera mounted on an exterior surface to capture picture frames from the field of view of the camera. The camera is enabled or operated during to capture a sequence of picture frames and record data representative of picture frames in the sequence. The telephone tracks motion in two or three axes of physical space.

The CPU 204 and/or computing device 102 may be adapted to process data or signals from the sensor 308 using acceleration algorithms that convert physical motion into virtual motions. The processed data translates the physical movement of the gestural input device 300 in free space into virtual motion in a digital content. The gestural input device 300 may be configured to filter out or detect unwanted movement or noise. The gestural input device 300 may also include a stabilizer, such as a mechanical stabilizer, such as a digital software stabilizer to detect and filter random movement.

The gestural input device may be set to provide scaling and sensitivity and other limits depending on user preferences, setting and the application. The processed data may represent any scaled motion in digital content. The algorithms may convert inches of motion of the gestural input device 300, or less, into virtual motions of an arbitrary scale. The movement of the gestural input device 300 also may be directly scaled, where one inch movement to the left of the gestural input device 300 is represented as a one inch movement in virtual space to the left. In addition or alternatively, the gestural input device 300 may be configured such that the physical movement of the gestural input device 300 in a forward distance 2 inches may correlate to movement of 2 feet in digital content or the movement of the device forward three inches results in a continuous scrolling instruction.

The movement of the gestural input device 300 to a predetermined distance or limit may represent an instruction to continue movement in that direction. In addition or alternatively, the movement may be abstracted where tipping the device a predetermined angle, such as 40 degrees downwards, represents an instruction for forward motion. The instruction for forward motion may persist while the gestural input device 300 is tilted and until the gestural input device is returned to a substantially upright position.

The movement of the gestural input device 300 also may represent one or more instructions to the CPU 204 and/or computing device 102. That is the motion of the gestural input device 300 may render gestural commands. For example, the CPU 204 may identify a sequence of movements of the gestural input device in free space, and translate the sequence of movements to a sequence of instructions to be carried out by the CPU 204. The gestural input device 300 may be programmed to correlate any sequence of movements to a corresponding function. The gestural input device 300 may be programmed or configured where standard movements of the gestural input device correlate to intuitive corresponding movement within the digital content. The gestural input device 300 may also or alternatively be programmed by the user to associate recognized movements or sequence of movements to input commands, instructions, and/or movement in digital space. Table 1 below illustrates one example of a default configuration of gestural input device 300:

**TABLE 1**

| Movement of Gestural Input Device | Movement in Digital Content |
|---|---|
| move right | scaled movement to the right/left |
| tilt right/left | scroll right/left |
| move forward/back | scaled movement to forward/reverse |
| tilt forward/back | scroll forward/back |
| Up/down | Scaled movement up/down |
| Sequence of Up then down | select and hold command |
| Sequence of tilt forward then back | Enter command |
| Sequence of tilt forward, right, and back | Communicate digital signature |

Although Table 1 illustrates an example of one possible default configuration for a gestural input device, other configurations and defaults are possible. In an example, a PDA may be configured for gestural input. The PDA may be moved in a sharp, or quick, motion to the left followed by a sharp motion upwards to instruct the PDA to "check mail." The PDA may be moved in other sequences of movement to identify a signature of the user. Similarly, a user can signal "no" with a left right wag of the PDA, or "yes" with an up-down wag.

Various embodiments of a gestural input systems and devices have been described and illustrated. However, the description and illustrations are by way of example only. Many more embodiments and implementations are possible within the scope of this invention and will be apparent to those of ordinary skill in the art. The various embodiments are not limited to the described environments, and can be applied to a wide variety of activities, including gaming, sporting, and educational applications.

Motion of a device employing a gestural input system or method may be correlated to virtual motion in 2 or 3 dimensions. A gestural input system allows the user of a handheld device to walk about in the real world, with corresponding motion in the virtual world. The user may also navigate large spreadsheet with slight movement of a handheld device, such as 6 inches to the right and 4 inches up on a large spreadsheet simply by moving their PDA up and to the right in space. The gestural input systems and methods allow for intuitive and easy access to data and for more immersive and reflexive game play. The gestural input devices and systems even allow gaming to take on a more physical form where a user can literally run 20 yards forward to drive a game 20 yards forward. The gestural input devices also may scale the relationship of the movement of the device to movement in digital content, or a virtual world. The motion may be scaled such that the physical motion of the gestural input device may result in greater or lesser relative movement in the digital content or the virtual world. For example, movement of 20 feet of the gestural input device in the physical world may result in virtual motion of 20 yards. Similarly a ducking and/or jumping motion in the real world may translate to a duck or jump of a character in a gaming environment, and such ducking and/or jumping may be scaled to exaggerate or reduce the extent of the motion in the gaming environment.

Another example of a gestural input device introduces computing platforms such as telephones, handhelds, laptops, tablet PC, and even desktop PC's to new applications and technologies. The gestural input device allows the creation of complementary assets. For example, a new gaming genre may be created to take advantage of the mobile data input capabilities of devices deploying a gestural input. Device configured for gestural input may be programmed to identify gestural shorthands for commands and/or gestural signatures. For example, a key fob for a gestural input device may be programmed to recognize a sequence of gestures or movements of a user, and in response, wirelessly communicate an instruction or confirmation. A user may move the gestural input device in a recognized sequence whereby the gestural input device wirelessly commands a vehicle to start its engine, unlock its doors, open its windows, or any combination thereof. The gestural input device may be programmed or configured to wirelessly communicate with an automated teller machine whereby an encrypition code may be communicated with the automated teller machine in response to recognizing a sequence of movements known only to the user. Similarly, the gestural input device may recognize an instruction to communicate an instruction for an electronic payment in a retail environment, bid in an auction, or even vote on something in a large gathering with a unique yea or nay motion.

It is intended in the appended claims to cover all such changes and modifications which fall within the true spirit and scope of the invention. Therefore, the invention is not limited to the specific details, representative embodiments, and illustrated examples in this description. Accordingly, the invention is not to be restricted except in light as necessitated by the accompanying claims and their equivalents.

## Claims

1. A handheld electronic device having user interface, the handheld device comprising:
(a) a sensor that generates information associated with an environmental condition for the handheld electronic device, changes in the environmental condition resulting, at least in part, based on movement of the handheld device relative to the environment;
(b) a controller that processes the data generated by the sensor
(c) a computer program executable by the controller for:
tracking movement of the handheld device in three-dimensional free space according to the data generated by the sensor;
translating the tracked movement of the device to a corresponding movement of digital content; and
displaying the corresponding movement in digital content via the user interface.

2. The handheld electronic device of claim 1 where the sensor is a digital camera.

3. The handheld electronic device of claim 2 where the digital camera generates data representative of a sequence of picture frames of the environment.

4. The handheld electronic device of claim 3 where the program executable by the controller includes detecting movement of the handheld electronic device according to detecting changes of objects between picture frames in the sequence of picture frames.

5. The handheld electronic device of claim 4 where the program executable by the controller includes detecting movement of the handheld electronic device according to visual edge detection.

6. The handheld electronic device of claim 4 where the program executable by the controller includes detecting movement of the handheld electronic device according to visual image interpolation.

7. The handheld electronic device of claim 1 where the changes in the environmental condition result, at least in part, on any one of changes in motion, acceleration, distance, velocity, and direction of motion of the handheld electronic device.

8. The handheld electronic device of claim 7 where the information generated by the sensor associated with an environmental condition for the handheld detects changes in the environmental conditions based on any one of inertial tracking, dead reckoning, infra-red tracking, radio frequency triangulation, reflective radio frequency technology (RADAR), and reflective sound technology (SONAR).

9. The handheld electronic device of claim 1 where the program executable by the controller includes identifying a sequence of movements of the handheld device and translating the sequence of movements to a programmed instruction to be performed by the controller.

10. The handheld electronic device of claim 1 where the program executable by the controller includes identifying a sequence of movements of the handheld device and translating the sequence of movements to a programmed instruction to be performed by the controller.

11. The handheld electronic device of claim 1 where the movement in digital content is scaled to the tracked movement of the handheld device.

12. The handheld electronic device of claim 11 where the movement in digital content is scaled at a ratio of substantially 1:1 to the tracked movement of the handheld device.

13. The handheld electronic device of claim 11 where the movement in digital content is scaled at a ratio of less than about 1:1 to the tracked movement of the handheld device.

14. The handheld electronic device of claim 11 where the movement in digital content is scaled at a ratio of greater than 1:1 to the tracked movement of the handheld device.

15. The handheld electronic device of claim 1 where the digital content is a virtual reality application.

16. The handheld electronic device of claim 15 where the virtual reality application is a gaming application.

17. The handheld electronic device of claim 15 where the handheld device comprises a telephone.

18. The handheld electronic device of claim 15 where the handheld device comprises a personal digital assistant.

19. The handheld electronic device of claim 15 further comprising at least one data input selected from the group consisting of a joystick, stylus, trackball, wheel, roller, touch screen, mouse, and a touchpad.

20. A gestural input device, comprising:
a camera configured to capture a sequence of picture frames of a field of view of the camera;
means for tracking features captured in the picture frames;
means for converting tracked features captured in the picture frames to movement of the input device; and
means for translating movement of the input device to movement in digital content.

21. The device of claim 20, wherein the means for tracking features captured in the picture frames comprises visual edge detection of objects captured in the sequence of picture frames.

22. The device of claim 21, where the means for tracking features captured in the picture frames comprises identifying coordinate differences between picture frames of the sequence of picture frames of edges of objects captured in the picture frames.

23. The device of claim 20, where the means for tracking features captured in the picture frames comprises visual image interpolation of objects captured in the sequence of picture frames.

24. The apparatus of claim 20, further comprising:
means for identifying a sequence of movements of the device; and
means for executing a programmed function according to identifying the sequence of movements.

25. The apparatus of claim 24, where the sequence of movements represents a user's personal identifier.

26. The apparatus of claim 20, further comprising a means for wirelessly communicating the translated movement of the input device to movement in digital content.

27. The apparatus of claim 20, further comprising means for displaying the translated movement of the input device in digital content.

28. A computer-readable medium having computer-executable instructions stored therein, the computer-executable instructions causing a controller to execute:
receiving data representative of changes in environmental conditions affected by a motion of the controller in free space in the environment;
identifying the motion of the controller according to the data; and
translating the motion of the controller to an instruction to be executed by the controller.

29. The computer-readable medium of claim 28 further causing a controller to execute:
recognizing a sequence of movements of the controller; and
identifying a programmed sequence of instructions to be executed by the controller.

30. The computer-readable medium of claim 28 further causing a controller to wirelessly transmitting translating the instruction.
